# EUROPEAN PATENT APPLICATION

(11) **EP 0 845 665 A2**
(43) Date of publication of application: **03.06.1998**
(21) Application number: 97119627.4
(22) Date of filing: 10.11.1997
(51) Int. Cl.: G01L 9/06

(54) **Sensor, bias circuit and method for shunting current therein**

(30) Priority: 02.12.1996 US 753820
(71) Applicant: MOTOROLA, INC., Schaumburg, IL 60196 (US)
(72) Inventor: Baskett, Ira E., Tempe, Arizona 85283 (US)
(74) Representative: Gibson, Sarah Jane

(57) **Abstract**

A method and a structure for terminating or endpointing an electrochemical etch that allows integration of a sensor circuit (16₁) with a diaphragm (14₁). The addition of a sensor diode (41₁) and a bias diode (51₁) block current from the sensor circuit (16₁) from interfering with the reverse bias current in a diaphragm diode (15₁). The reverse bias current in the diaphragm diode (15₁) is used to determine when to terminate the etch that controls the thickness of diaphragm (14₁). The diaphragm (14₁) is a portion of a semiconductor material that remains after an electrochemical etch.

## Description

### Background of the Invention

The present invention relates, in general, to sensors and, more particularly, to integrated sensors.

Sensors are commonly used for converting physical conditions such as temperature, pressure, and acceleration to an electrical sensor signal for further processing. A typical sensor, such as a pressure sensor, includes a diaphragm for converting a pressure into a stress. A transducer converts the stress into the sensor signal which is typically amplified and filtered to provide a sensor output signal.

An important step in the manufacture of sensors is the formation of the diaphragm. Typically, the diaphragm is formed by etching a cavity into a semiconductor material. A key aspect in the cavity formation is termination or end point of the etch. Techniques for terminating the etches include using timed etches, using an oxide etch stop, using a differential etch selectivity, and using electrochemical etch techniques. A drawback of the timed etch and the oxide etch stop techniques are cost and controllability. A drawback of electrochemical etches is that shorting occurs between the electrochemical bias circuit and the sensor circuit.

Hence, a need exists for a structure and a method for forming a diaphragm that allows accurate endpointing of the etch. In addition, it would be desirable for the technique to be compatible with existing process flows and to allow integration of circuitry with the diaphragm. It would be of further advantage for the method to be cost efficient.

### Brief Description of the Drawings

FIG. 1 is a partially cut-away isometric view of a plurality of sensor die in wafer form in accordance with the present invention;
FIG. 2 is a partially cut-away isometric view of a single sensor die of FIG. 1;
FIG. 3 is a cross-sectional view of the sensor die of FIG. 1; and
FIG. 4 is a schematic diagram of a sensor in accordance with the present invention.

### Detailed Description of the Drawings

Generally, the present invention provides a sensor and a method for manufacturing the sensor. In one aspect, the present invention provides a method for endpointing or terminating an electrochemical etch for a semiconductor material. In another aspect, the present invention provides a method for probing the sensor while in wafer form at die probe. An advantage of the present invention is that it isolates the electrochemical biasing portion of the circuit from the sensing portion during etch as well as during sensor circuit operation at die probe.

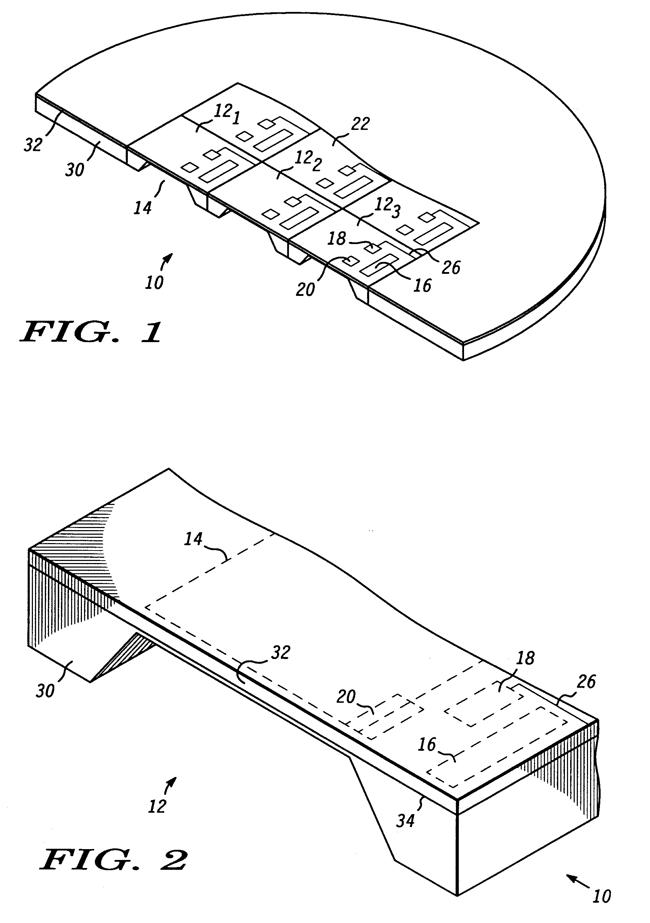

FIG. 1 is a partially cut-away isometric view of a semiconductor wafer 10 which is comprised of a plurality of sensors in accordance with the present invention. By way of example, semiconductor wafer 10 is comprised of a semiconductor material which is comprised of a semiconductor substrate 30 of P-type conductivity having an epitaxial layer 32 of N-type conductivity disposed thereon. It should be understood that the semiconductor material is not limited to being an N-type epitaxial disposed on a P-type substrate. In other words, the semiconductor material may be a semiconductor substrate, a P-type epitaxial layer disposed on an N-type semiconductor substrate, etc. Further, the semiconductor substrate may be silicon, gallium arsenide, silicon germanium, or the like. Semiconductor wafer 10 includes a plurality of sensor die 12 each having a diaphragm 14 formed by electrochemical etching. Each sensor die 12 is comprised of a sensor circuit 16, an electrochemical etch-stop bias circuit 18, and a piezo resistor 20. By way of example, sensor circuit 16 is comprised of an operational amplifier coupled to a plurality of trimmable resistors. Sensor circuit 16 is also referred to as a signal conditioning circuit. The operational amplifier and the trimmable resistors of sensor circuit 16 cooperate to calibrate and compensate piezo resistor 20. A connecting path 26 provides an electrical path from etch-stop bias circuit 18 to a metal grid 24. Metal grid 24 is formed by metal filling the scribe grids or scribe lines of semiconductor wafer 10. It should be noted that the layout and the types of circuits present in each sensor die 12 are not limitations of the present invention. For example, etch-stop bias circuit 18 may be present on one side of diaphragm 14 and sensor circuit 16 may be present on an opposite side of diaphragm 14. In addition, sensor circuit 16 may be comprised of logic circuitry, control circuitry, or the like.

Semiconductor wafer 10 has a central die 22 which is electrically connected to a metal grid 24. Metal grid 24 is formed from the metal that fills the scribe regions or grids that surround each sensor die 12.

FIG. 2 is a partially cut-away isometric view of a single sensor die 12 of FIG. 1. It should be noted that the same reference numbers are used in the figures to denote the same elements. Sensor die 12 is comprised of a p-type semiconductor substrate 30 having a major surface 34. N-type epitaxial layer 32 is disposed on major surface 34 and provides a high quality base for building sensor circuit 16, etch-stop bias circuit 18, and piezo resistor 20. Diaphragm 14 is a selected region of epitaxial layer 32 and a remaining portion of semiconductor substrate 30 after an electrochemical etch or milling process has etched impurity region 30. By way of example, the portion of semiconductor wafer 10 from which diaphragm 14 is formed has an initial thickness of about 460 microns (µ) which is approximately 18 mils. Diaphragm 14 is formed by etching a back-side of impurity region 30 with an orientation selective etching solution. Suitable orientation selective etching solutions for 〈110〉 silicon include potassium hydroxide (KOH), tetramethyl ammonium hydroxide (TMAH), or the like Following the electrochemical etch, the active portion of diaphragm 14 has a thickness of about 15 microns. Formation of diaphragms using solutions such as KOH and TMAH are known to those skilled in the art.

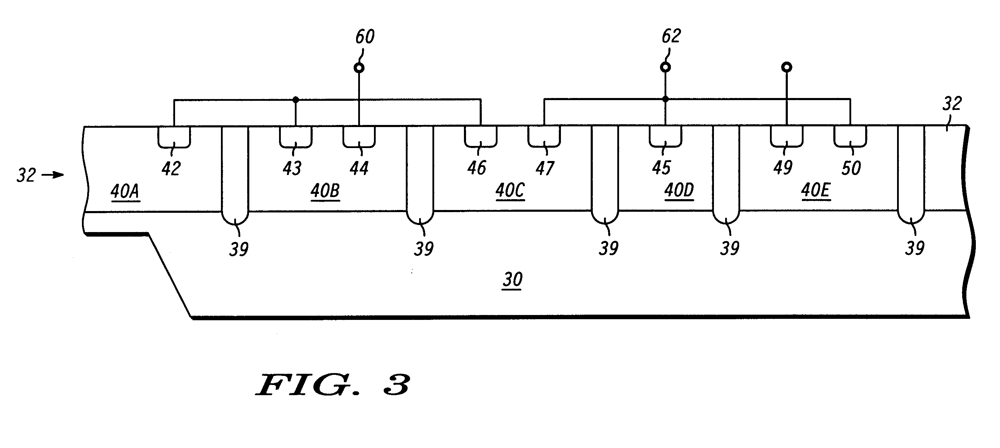

FIG. 3 is a cross-sectional view of a plurality of semiconductor devices formed in semiconductor wafer 10 which cooperate to form an etch-stop bias circuit structure in accordance with the present invention. More particularly, FIG. 3 illustrates a plurality of isolation structures 39 and isolated regions 40A, 40B, 40C, 40D, and 40E. Each isolated region is junction isolated from an adjacent isolated region by an isolation structure. In other words, isolation structures 39 are heavily doped P-type regions extending through N-type epitaxial layer 32 into P-type impurity region 30.

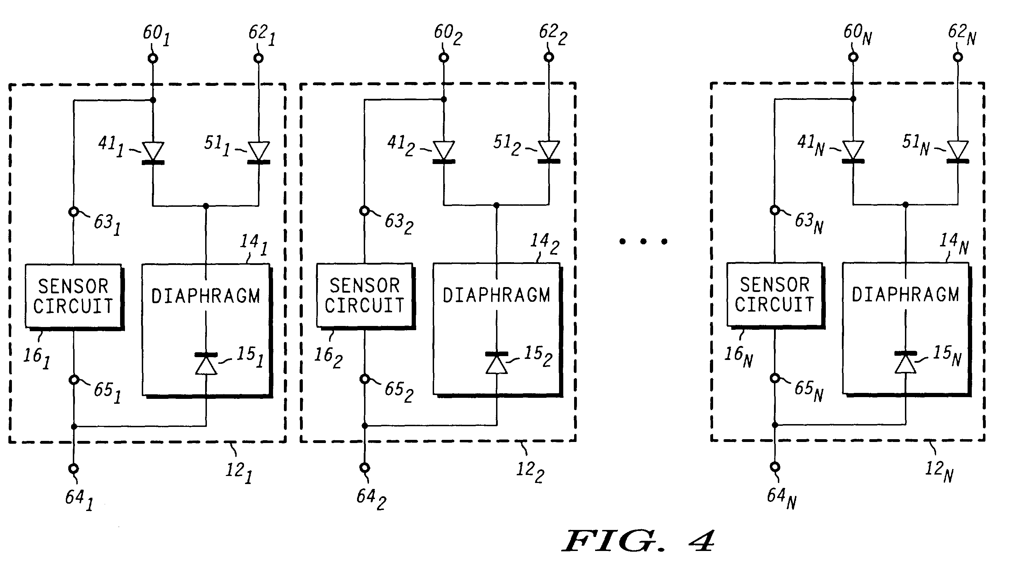

Isolated region 40A has an N+-type doped region 42 formed therein. Isolated region 40B has an N+-type doped region 43 and a P-type doped region 44 formed therein. Doped regions 43 and 44 are spaced apart and cooperate with the N-type epitaxial layer 32 of isolated region 40B to form a bias diode 41A (shown in FIG. 4). Isolated region 40C has an N+-type doped region 46 and a P-type doped region 47 formed therein. Doped regions 46 and 47 are spaced apart and cooperate with the N-type epitaxial layer 32 of isolated region 40C to form a sensor diode 51A (shown in FIG. 4). Isolated region 40D has an N+-type doped region 45 formed therein. Isolated region 40E has an N+ type doped region 49 and a P-type doped region 50 formed therein. Doped regions 49 and 50 are spaced apart and cooperate with the N-type epitaxial layer 32 of isolated region 40E to form a diode 51B (shown in FIG. 4). It should be noted that isolated region 40D is between two adjacent die on semiconductor wafer 10 and is below a portion of metal grid 24 (shown in FIG. 1).

Techniques for forming doped regions and electrically contacting the doped regions are well known to those skilled in the art.

It should be understood that PN junction diodes, such as sensor diode 41A and bias diode 51A could also be formed from diode connected transistors or uni-directional devices. In other words, devices such as an NPN transistors, PNP transistors, silicon controlled rectifiers (SCRs), metal oxide semiconductor field effect transistors (MOSFETs), or the like, have oppositely doped regions that could be used to form a diode.

FIG. 4 is a schematic diagram showing sensor diodes and bias diodes for a plurality of sensors in wafer form in accordance with the present invention. It should be noted that the same reference numbers are used in the figures to denote the same elements. It should be understood that the subscripted numbers have been appended to the reference numbers to indicate the relationship between the elements of adjacent die, i.e., that diodes 41₁-41_{N} have similar structures but are in different die. It should be further understood that "N" is a variable representing an integer number. Likewise diodes 51₁-51_{N} have similar structures but are located in different semiconductor die; 14₁-14_{N} have similar structures but are located in different semiconductor die; and sensor circuits 16₁-16_{N} have similar structures but are located in different semiconductor die. It should be noted that diaphragm diodes 15₁-15_{N} represent the diodes formed by the unetched portion of P-type impurity region 30 adjacent to N-type epitaxial layer 32 in diaphragms 14₁-14_{N}, respectively. Diaphragm diodes 15₁-15_{N} are also referred to as isolation devices or isolating diodes. Thus, reference numbers having the same reference number appended thereto are formed in the same die. For example, diodes 41₁, 51₁, diaphragm 14₁, and sensor circuit 16₁ are formed in the same die 12₁.

Sensor die 12₁ includes a sensor diode 41₁, a bias diode 51₁, a sensor circuit 16₁, and diaphragm diode 15₁ of diaphragm 14₁. More particularly, the cathodes of sensor diode 41₁, bias diode 51₁, and diaphragm diode 15₁ are commonly connected. The anode of sensor diode 41₁ is connected to terminal 60₁ and to the positive power terminal 63₁ of sensor circuit 16₁. The anode of bias diode 51₁ is connected to terminal 62₁. The anode of diaphragm diode 15₁ is commonly connected to terminal 64₁ and to the negative power terminal 65₁ of sensor circuit 16₁.

Sensor die 12₂ includes a sensor diode 41₂, a bias diode 51₂, a sensor circuit 16₂, and diaphragm diode 15₂ of diaphragm 14₂. More particularly, the cathodes of sensor diode 41₂, bias diode 51₂, and diaphragm diode 15₂ are commonly connected. The anode of sensor diode 41₂ is connected to terminal 60₂ and to the positive power terminal 63₂ of sensor circuit 16₂. The anode of bias diode 51₂ is connected to terminal 62₂. The anode of diaphragm diode 15₂ is commonly connected to terminal 64₂ and to the negative power terminal 65₂ of sensor circuit 16₂.

Sensor die 12_{N} includes a sensor diode 41_{N}, a bias diode 51_{N}, a sensor circuit 16_{N}, and diaphragm diode 15_{N} of diaphragm 14_{N}. More particularly, the cathodes of sensor diode 41_{N}, bias diode 51_{N}, and diaphragm diode 15_{N} are commonly connected. The anode of sensor diode 41_{N} is connected to terminal 60_{N} and to the positive power terminal 63_{N} of sensor circuit 16_{N}. The anode of bias diode 51_{N} is connected to terminal 62_{N}. The anode of diaphragm diode 15_{N} is commonly connected to terminal 64_{N} and to the negative power terminal 65_{N} of sensor circuit 16_{N}.

Terminals 62₁-62_{N} are commonly connected through metal grid 24 (FIG. 1). Terminals 64₁-64_{N} are commonly connected through semiconductor substrate 30.

In operation, as an etch-stop bias circuit, semiconductor wafer 10 is placed in an etching solution (not shown) such that semiconductor substrate 30 is in contact with the etching solution. A positive operating potential is applied to probe pads on central die 22 (FIG. 1) and the positive operating potential is distributed to terminals 62₁-62_{N} through metal grid 24. Terminal 64₁ and the anode of diaphragm diode 15₁ receive a negative operating potential through a reference electrode in the etch solution. The positive operating potential at terminal 62₁ and the negative operating potential at terminal 64₁ cause bias diode 51₁ to be forward biased, i.e., provide a current conduction path. During the process of etching diaphragm 14₁, terminal 60₁ does not receive an external reference voltage. The sensor diode 41₁ is reverse biased and blocks current from conducting through sensor circuit 16₁. Likewise, the positive operating potential at terminals 62₂-62_{N} and the negative operating potential at terminals 64₂-64_{N} cause sensor diodes 41₂-41_{N} to be reversed biased and block current from conducting through sensor circuits 16₂-16_{N}. The combined small current from reversed biased diaphragm diodes 15₁-15_{N} allows diaphragms 14₁-14_{N} to be reliably etched when integrated with sensor circuits 16₁-16_{N}, respectively. The larger currents from sensor circuits 16₁-16_{N} are blocked by sensor diodes 41₁-41_{N}, respectively, from altering currents in diaphragm diodes 15₁-15_{N}. The thicknesses of diaphragms 14₁-14_{N} can be correlated to the current in the narrowing depletion region of reverse biased diaphragm diodes 15₁-15_{N} during an on-going electrochemical etching process. An oxide forms on the impurity region in the diaphragm region of the semiconductor substrate when the depletion region narrows for diaphragm diodes 15₁-15_{N}. As the oxide forms, the electrochemical etching process stops. Thus, the present invention provides a method and a structure for terminating or endpointing an electrochemical etch in milling diaphragms 14₁-14_{N} when integrated with other circuitry.

At probe, a positive operating potential is applied at terminal 60₁ and a negative operating potential is applied at terminal 64₁. For example, terminal 60₁ could receive a positive voltage of 5 volts and terminal 64₁ could receive a ground reference. Terminal 62₁ receives a negative operating potential or ground reference and bias diode 51₁ is reverse biased. Alternatively, terminal 62₁ could be left floating and bias diode 51₁, is reverse biased. Sensor die 12₁ is tested for functionality with the positive operating potential applied at terminal 60₁ and the negative operating potential applied at terminal 64₁. While sensor die 12₁ is tested, other sensor die 12₂-12_{N} are not conducting current due to the reverse biased diaphragm diodes 15₂-15_{N}. After testing sensor die 12₁, sensor die 12₂ is tested by applying a positive operating potential at terminal 60₂ and a negative operating potential at terminal 64₂. Only the sensor die 12₁-12_{N} currently being tested receives a positive operating potential at respective terminals 60₁-60_{N}. During normal operation, sensor diodes 41₁-41_{N} are forward biased while bias diodes 51₁-51_{N} and diaphragm diodes 15₁-15_{N} are reversed biased.

By now it should be appreciated that the present invention provides a method and a structure for terminating or endpointing an electrochemical etch. This technique allows integration of circuitry with the diaphragm. The inclusion of a sensor diode and a bias diode on a semiconductor die provide electrical isolation for the circuit portion during the electrochemical etch process. The changing reverse bias current through a narrowing depletion region of the diaphragm diode can be used as an indicator of the thickness of the diaphragm even when circuitry is integrated with the diaphragm. The electrochemical etch process can be terminated when the reverse bias current reaches a current setpoint or by an oxide that forms on the impurity region in the diaphragm region of the semiconductor substrate. The addition of two diodes to a sensor die is cost efficient and easily integratable into existing process flows.

## Claims

1. A sensor, comprising:
a semiconductor material having a first portion of a first conductivity type, a second portion of a second conductivity type, and a major surface;
a first isolated region in the semiconductor material, a portion of the first isolated region serving as a diaphragm of the sensor;
an isolation device in the first isolated region;
a second isolated region in the semiconductor material; and
the second isolated region containing a semiconductor device.

2. The sensor of claim 1, wherein the semiconductor material comprises a semiconductor substrate having an epitaxial layer formed thereon, the epitaxial layer serving as the first portion and the semiconductor substrate serving as the second portion.

3. The sensor of claim 1, wherein the isolation device is an isolating diode having an anode and a cathode and further including:
a third isolated region in the semiconductor material;
a first diode having an anode and a cathode, the first diode in the second isolated region; and
a second diode having an anode and a cathode, the second diode in the third isolated region, the cathode of the second diode coupled to the cathode of the first diode and to the cathode of the isolating diode.

4. A bias circuit, comprising:
a first diode having an anode and a cathode;
a second diode having an anode and a cathode; and
a third diode having an anode and a cathode, wherein the cathodes of the first, second, and third diodes are commonly coupled.

5. The bias circuit of claim 4, wherein the third diode is coupled for receiving a potential via an etch solution.

6. A method for shunting current in a sensor, comprising the steps of:
providing a semiconductor material having a first portion of a first conductivity type and a second portion of a second conductivity type, wherein the first and second portions cooperate to form a diode;
inducing a leakage current to flow in the diode; and
creating a current conduction path in the first portion of the semiconductor material, the leakage current flowing through the current conduction path.

7. The method of claim 6, wherein the step of creating a current conduction path includes forward biasing a PN junction in the first portion of the semiconductor material.

8. The method of claim 6, wherein the step of inducing a leakage current includes placing the second portion of the semiconductor material in an etching solution.

9. The method of claim 6, wherein the step of inducing a leakage current includes applying a first potential to a first sub-portion of the first portion of the semiconductor material and applying a second potential to the second portion of the semiconductor material.

10. The method of claim 6, further including applying a third potential to a second sub-portion of the first portion of the semiconductor material.
